# EUROPEAN PATENT APPLICATION

(11) **EP 3 220 009 A1**
(43) Date of publication of application: **20.09.2017**
(21) Application number: 17161423.3
(22) Date of filing: 16.03.2017
(51) Int. Cl.: F16H 7/02, F16H 7/08

(54) **SAFETY CLUTCH**

(30) Priority: 16.03.2016 US 201662309280 P
(71) Applicant: CMI Roadbuilding Ltd., Leicester LE4 6GH (GB)
(72) Inventor: MUSIL, Joseph E., Ely, IA 52227 (US)
(74) Representative: Carpmaels & Ransford LLP

(57) **Abstract**

A clutch comprising a drive pulley, a driven pulley, a belt selectively rotationally coupling the drive pulley and the driven pulley, at least one idler pulley positioned between the drive pulley and the driven pulley, and a friction brake. The idler pulley being moveable between a belt engaged position and a belt disengaged position. The friction brake has a friction element and a clamping face. The clamping face is moveable between a first position wherein the clamping face is spaced a first distance from the friction element such that the belt may freely rotate and frictionally engage the drive pulley and the driven pulley when the idler pulley and a second position wherein the clamping face is spaced a second distance from the friction element such that the belt is securely clamped by the friction element and the clamping face.

## Description

### INCORPORATION BY REFERENCE

This application claims priority to U.S. Provisional Application Serial No. 62/309,280 filed March 16, 2016, the entire content of which is hereby expressly incorporated herein by reference.

### BACKGROUND

Clutches are utilized in a variety of applications. For instance, clutches are used in industrial, automotive, construction, and agriculture settings to permit selective engagement of power from an engine or power source to a driven apparatus. Generally speaking, clutches have the ability to control the rate of engagement between the power source and the driven apparatus thus ensuring that the power source is not stalled during engagement and/or the driven apparatus is not overly stressed.

In some applications, power is provided from the power source to the driven apparatus via a v-belt clutch system such as the one disclosed in U.S. Patent No. 7,553,248 issued June 30, 2009, to Busboom et al. V-belt clutch systems typically include an endless belt extending between a pulley attached to the driveshaft of the power source, and a pulley attached to the driven apparatus. In some v-belt clutch systems, an idler pulley may be used to selectively tension the belt and deliver power from the drive source to the driven apparatus. To disengage power to the driven apparatus, the idler pulley may be moved away from the belt until belt tension is sufficiently relaxed.

In a v-belt type clutch system, when the clutch is disengaged, the v-belt normally remains in contact with friction surfaces of the pulleys, which are moving at different speeds. This creates a significant amount of undesirable drag and belt wear. In addition, contact between the disengaged belt and the drive source pulley may cause the driven apparatus to be inadvertently engaged.

Many driven apparatuses require service or repair. This could include, for example, mower blades or cutter tips, earth digging blades or cutting teeth, cutter teeth on grinding machines, or machine teeth on road milling or reclaimer-stabilizer machines. In the past, there has not been a way to safely perform maintenance on a driven apparatus while the power source was still running because the disengaged belt could contact the drive source pulley and inadvertently engage the driven source.

### BRIEF DESCRIPTION OF THE DRAWINGS

FIG. 1 is a front elevation view of a v-belt clutch system shown in an engaged or running position in accordance with one embodiment of the presently disclosed inventive concepts.
FIG. 2 is a front elevation view of the v-belt clutch system of FIG. 1 in a disengaged or stopped position.
FIG. 3 is a front elevation view of another embodiment of a v-belt clutch system shown in an engaged or running position in accordance with one embodiment of the presently disclosed inventive concepts.
FIG. 4 is a front elevation view of the v-belt clutch system of FIG. 3 in a disengaged or stopped position.

### DETAILED DESCRIPTION OF EXEMPLARY EMBODIMENTS

Before explaining at least one embodiment of the disclosure in detail, it is to be understood that the disclosure is not limited in its application to the details of construction, experiments, exemplary data, and/or the arrangement of the components set forth in the following description or illustrated in the drawings unless otherwise noted.

The systems and methods as described in the present disclosure are capable of other embodiments or of being practiced or carried out in various ways. Also, it is to be understood that the phraseology and terminology employed herein is for purposes of description, and should not be regarded as limiting.

The following detailed description refers to the accompanying drawings. The same reference numbers in different drawings may identify the same or similar elements.

As used in the description herein, the terms "comprises," "comprising," "includes," "including," "has," "having," or any other variations thereof, are intended to cover a non-exclusive inclusion. For example, unless otherwise noted, a process, method, article, or apparatus that comprises a list of elements is not necessarily limited to only those elements, but may also include other elements not expressly listed or inherent to such process, method, article, or apparatus.

Further, unless expressly stated to the contrary, "or" refers to an inclusive and not to an exclusive "or". For example, a condition A or B is satisfied by one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the inventive concept. This description should be read to include one or more, and the singular also includes the plural unless it is obvious that it is meant otherwise. Further, use of the term "plurality" is meant to convey "more than one" unless expressly stated to the contrary.

As used herein, any reference to "one embodiment," "an embodiment," "some embodiments," "one example," "for example," or "an example" means that a particular element, feature, structure or characteristic described in connection with the embodiment is included in at least one embodiment. The appearance of the phrase "in some embodiments" or "one example" in various places in the specification is not necessarily all referring to the same embodiment, for example.

As used herein, the term "v-belt" refers to an endless belt with a longitudinally v-shaped or ribbed traction surface which engages and grips, by friction, pulley grooves of similar shape. It should be understood that as used herein, the term "v-belt" is not meant to limit the presently disclosed inventive concepts to one type of belt or of a type having a certain cross-section. Instead, the "v-belt" may have any construction or have any profile shape known in the art.

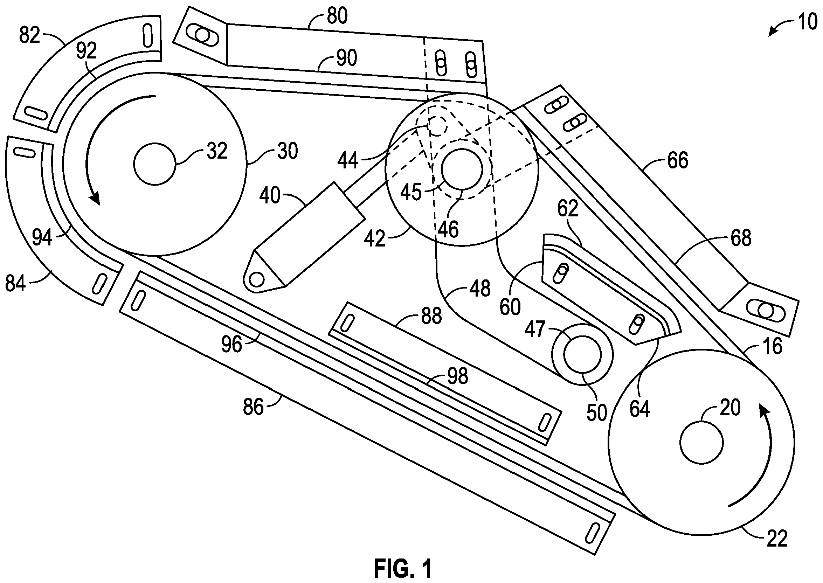

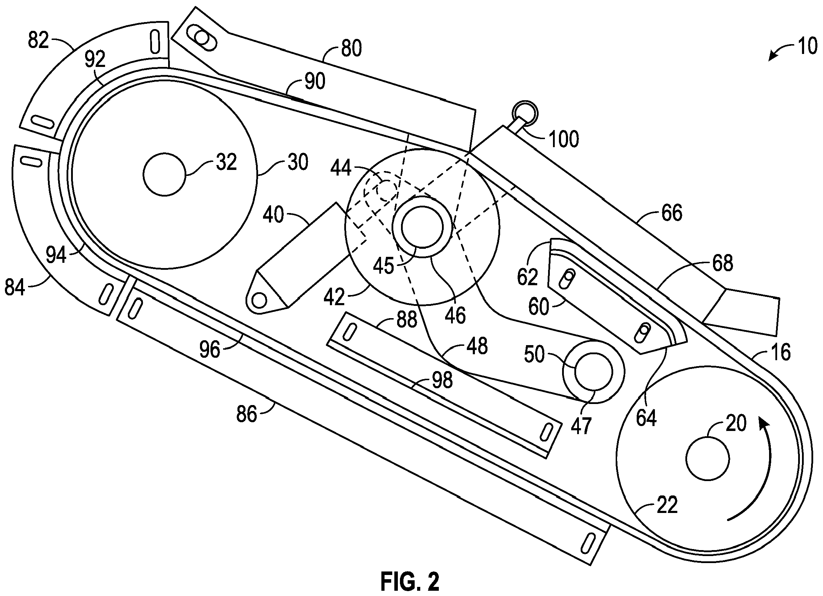

Referring now to the figures, and in particular to FIGS. 1 and 2, shown therein is a v-belt clutch system 10 connectable to a drive source (not shown) configured to selectively provide power to a driven apparatus (also not shown) via at least one v-belt 16. The drive source can be any suitable apparatus known in the art capable of imparting rotational motion to a drive shaft 20. By way of example, the drive source can be gasoline motor, a diesel motor, an electric motor, or a steam motor. A drive pulley 22 is fixedly connected to the drive shaft 20 and configured to frictionally interface with the v-belt 16.

A driven pulley 30 is fixedly connected to a driven shaft 32 which is connectable to the driven apparatus and configured to frictionally interface with the v-belt 16. When the v-belt 16 frictionally engages both the drive pulley 22 and the driven pulley 30, a driving force is applied to the driven shaft 32 such that the driven apparatus is engaged. By way of non-limiting example, the driven apparatus can be any suitable apparatus known in the art such as, for instance, a mower, an earth digging machine, a grinding machine, a road milling machine, or a reclaimer-stabilizer machine.

To selectively frictionally engage the v-belt 16 with the drive pulley 22 and the driven pulley 30, the v-belt clutch system 10 is provided with an actuator 40 configured to selectively engage or disengage an idler pulley 42 from the v-belt 16. The actuator 40 can be any suitable apparatus known in the art capable of imparting a sufficient linear pushing and pulling force such as, for instance, a pneumatic actuator, a hydraulic actuator, or an electrically driven actuator. It should be understood, however, that these actuators have been provided by way of example only and are in no way to be construed as limiting the presently disclosed inventive concepts.

The actuator 40 is pivotally connected at one end to a fixed point, for instance, on the drive source, and pivotally connected at an opposite end to an aperture 44 bored or otherwise formed in one end of a swing arm 48. The swing arm 48 is provided with apertures 45 and 47 bored or otherwise formed in the swing arm 48 configured to connect to and coaxially surround at least a portion of an idler pulley shaft 46 and a swing arm pivot 50, respectively. In the embodiment shown in FIGS. 1 and 2, at least a portion of the idler pulley shaft 46 may be fixedly connected within the aperture 45 of the swing arm 48, and the swing arm pivot 50 may be rotatably connected at least partially within aperture 47 of the swing arm 48.

As shown in FIG. 1, the actuator 40 is configured to impart a pushing linear force on the swing arm 48, which causes the swing arm 48 to pivot around swing arm pivot 50 thereby moving the idler pulley 42 to engage the v-belt 16. The actuator 40 is configured to selectively increase or decrease the pushing linear force to adjust a tension of the v-belt 16 until the v-belt 16 frictionally couples the drive pulley 22 and the driven pulley 30 thereby engaging the driven apparatus.

As shown in FIG. 2, to disengage the driven apparatus, a pulling linear force is applied to the swing arm 48 by the actuator 40 causing the idler pulley 42 to at least partially disengage from the v-belt 16 releasing the tension.

In some embodiments of the v-belt clutch system 10, the rate at which the actuator 40 applies the pushing force to engage the driven apparatus can be adjusted. Also, the rate at which the actuator 40 applies the pulling force to activate the belt braking system can be independently adjusted (from the pushing force).

The v-belt clutch system 10 is further provided with a friction brake 60 including a friction element 62 supported by a backing element 64 and a clamping element 66 pivotally connected to the idler pulley shaft 46 at one end and pivotally connected to a fixed point on the drive source, for instance, at an opposite end.

As shown in FIG. 2, in operation of the v-belt clutch system 10, as the actuator 40 at least partially disengages the idler pulley 42 from the v-belt 16, the clamping element 66 moves with the idler pulley shaft 46 until a clamping face 68 of clamping element 66 engages one side of the v-belt 16 and an opposite side of the v-belt 16 is engaged by friction element 62, which is supported in a stationary position. As the actuator 40 engages the idler pulley 42 with the v-belt 16, the clamping face 68 of clamping element 66 disengages from the v-belt 16 thereby allowing the v-belt 16 to freely rotate and frictionally engage the drive pulley 22 and the driven pulley 30, as shown in FIG. 1. Although the embodiment is shown with friction element 62 mounted backing element 64, in another embodiment (not shown) a friction element could be provided on the clamping face 68 so that the friction surface could be as shown, on the clamping face 68, or on both the friction element 62 and the clamping face 68.

In some embodiments, the v-belt clutch system 10 may be provided with a controller (not shown) that can control statically or dynamically the force applied by the actuator 40 to control the operational (system running) tension on the v-belt 16 and independently, separately control the force applied by the actuator 40 to the friction element 62.

In some embodiments, the v-belt clutch system 10 may be provided with a means (not shown) such as a hydraulic accumulator, spring, or other means configured to hold the actuator 40 in a retracted position so the v-belt 16 is clamped between friction element 62 and clamping face 68 when power is not being supplied to the actuator 40 such as, for instance, when the drive source is shut down or electrical power is lost.

The v-belt clutch system 10 is further provided with a pivoting belt guard 80 and a plurality of belt guards 82, 84, 86, and 88. The pivoting belt guard 80 and the plurality of belt guards 82, 84, 86, and 88 are provided with inner surfaces 90, 92, 94, 96, and 98 configured to constrain the v-belt 16 causing the disengaged v-belt 16 to separate from the drive pulley 22 and the driven pulley 30, as shown in FIG. 2. The pivoting belt guard 80 and the plurality of belt guards 82, 84, 86, and 88 restrict the outward movement of the v-belt 16 after the v-belt 16 is disengaged from the drive pulley 22 and the driven pulley 30. As the v-belt 16 is disengaged and clamped by the friction brake 60, the v-belt 16 is directed against the inner surfaces 90, 92, 94, 96, and 98 of the pivoting belt guard 80 and the plurality of belt guards 82, 84, 86, and 88 to keep the v-belt 16 completely separated from the drive pulley 22 and the driven pulley 30 to eliminate any friction between the v-belt 16 and the drive pulley 22 or the driven pulley 30.

As shown in FIG. 2, when the actuator 40 is in a retracted position and the v-belt 16 is securely clamped by the friction brake 60, a safety pin 100 may be inserted and extend at least partially into a bore (not shown) in the drive source in a position behind the clamping element 66 to lock the idler pulley 42 and ensure that the clamping element 66 is prevented from moving, thereby insuring that the v-belt 16 remains securely clamped by the friction brake 60 and completely separated from the drive pulley 22 and the driven pulley 30. Although the safety pin 100 is shown inserted behind the clamping element 66, it should be noted that in other embodiments the safety pin 100 may be inserted in other positions as long as the safety pin 100 prevents the idler pulley 42 from being moved to frictionally engage the v-belt 16.

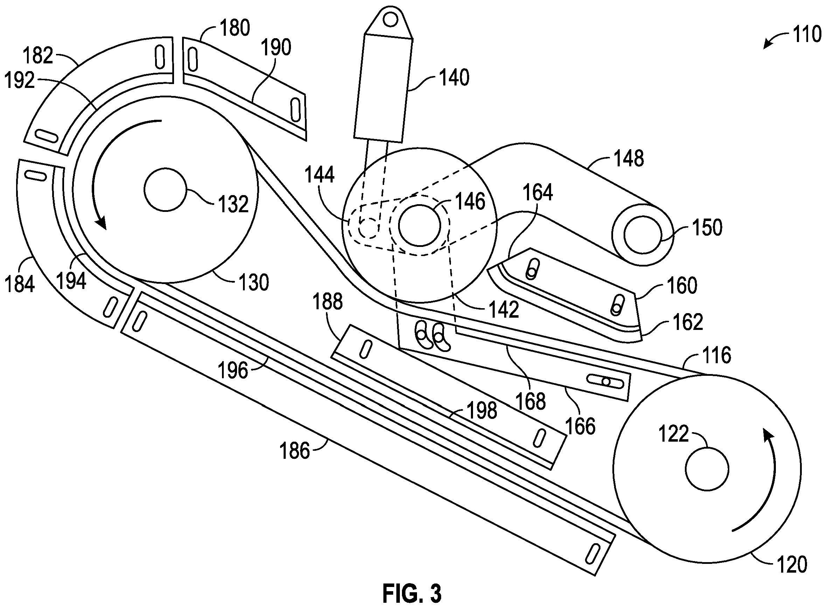

Referring now to FIG.3, a v-belt clutch system 110 is shown in accordance with one embodiment of the presently disclosed inventive concepts. In this embodiment, the v-belt clutch system 110 is provided with a drive apparatus (not shown), a driven apparatus (also not shown), and a v-belt 116 extending between and concentrically surrounding a drive pulley 120 fixedly connected to a drive shaft 122 which is connectable to the drive apparatus, and a driven pulley 130 fixedly connected to a driven shaft 132 which is connectable to the driven apparatus.

In the embodiment shown in FIG. 3, an actuator 140 is pivotally connected at one end to a fixed point, for instance, on the drive apparatus, and pivotally connected at an opposite end to an actuator arm 144. The actuator arm 144 is fixedly connected to an idler pulley shaft 146. A swing arm 148 is pivotally connected at one end to the idler pulley shaft 146 and pivotally connected to a pivot shaft 150 at an end opposite the idler pulley shaft 146.

As shown in FIG. 3, the actuator 140 is configured to impart a pushing linear force on the actuator arm 144 which pivots the swing arm 148 around the pivot shaft 150 causing an idler drum 142 to engage an upper surface of the v-belt 116. The actuator 140 is configured to selectively increase or decrease the pushing linear force to adjust a tension on the v-belt 116 until the v-belt 116 frictionally couples the drive pulley 122 and the driven pulley 130 thereby engaging the driven apparatus.

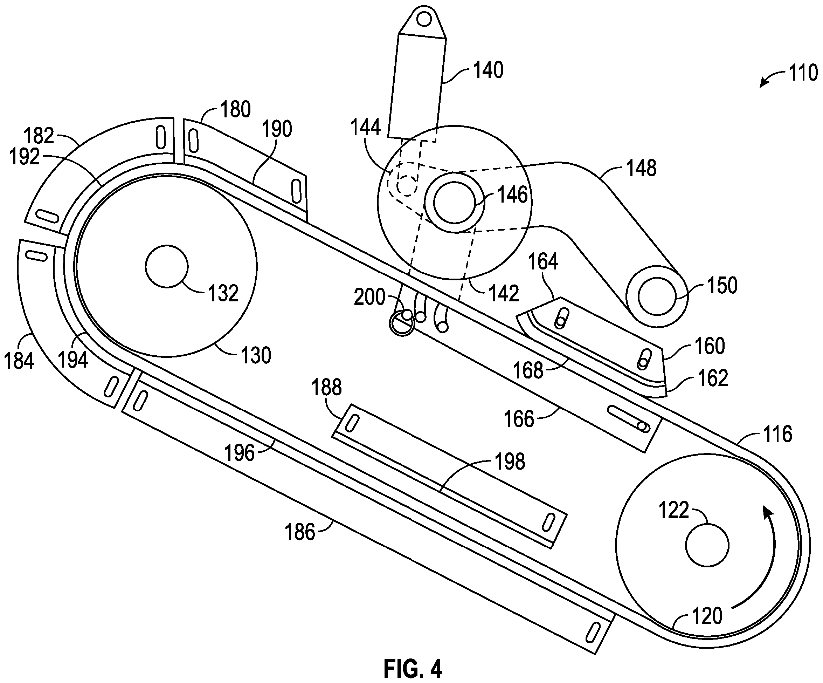

As shown in FIG. 4, to disengage the driven apparatus, a pulling linear force is applied by the actuator 140 to the actuator arm 144 which pivots the swing arm 148 around the pivot shaft 150 causing the idler drum 142 to at least partially disengage from the v-belt 116 releasing the tension.

In some embodiments of the v-belt clutch system 110, the rate at which the actuator 140 applies the pushing force to engage the driven apparatus can be adjusted. Also, the rate at which the actuator 140 applies the pulling force to activate the belt braking system can be independently adjusted (from the pushing force).

The v-belt clutch system 110 is further provided with a friction brake 160 including a friction element 162 supported by a backing element 164 and a clamping element 166. The clamping element 166 is pivtoally connected to the idler pulley shaft 146 at one end and pivotally connected to a fixed point on the drive apparatus, for instance, at an opposite end.

In operation of the v-belt clutch system 110, as the actuator 140 at least partially disengages the idler drum 142 from the v-belt 116, the clamping element 166 moves with the idler pulley shaft 146 until a clamping face 168 of the clamping element 166 engages a lower side of the v-belt 116 as the upper side of the v-belt 116 is engaged by the friction element 162 as shown in FIG. 4. As the actuator 140 engages the idler drum 142 with the v-belt 116, the clamping face 168 of the clamping element 166 disengages from the v-belt 116 thereby allowing the v-belt 116 to freely rotate and frictionally engage the drive pulley 122 of the drive source 112 and the driven pulley 130 of the driven apparatus, as shown in FIG. 3. Although the embodiment is shown with friction element 162 mounted backing element 164, in another embodiment (not shown) a friction element could be provided on the clamping face 168 so that the friction surface could be as shown, on the clamping face 168, or on both the friction element 162 and the clamping face 168.

In some embodiments, the v-belt clutch system 110 may be provided with a controller (not shown) that can control statically or dynamically the force applied by the actuator 140 to control the operational (system running) tension on the v-belt 116 and independently, separately control the force applied by the actuator 140 to the friction element 162.

In some embodiments, the v-belt clutch system 110 may be provided with a hydraulic accumulator, spring, or other means (not shown) configured to hold the actuator 140 in a retracted position so the v-belt 116 is clamped between friction element 162 and clamping face 168 when power is not being supplied to the actuator 140 such as, for instance, when the drive source is shut down or electrical power is lost.

The v-belt clutch system 110 is further provided with a plurality of belt guards 180, 182, 184, 186, and 188. The plurality of belt guards 180, 182, 184, 186, and 188 are provided with inner surfaces 190, 192, 194, 196, and 198 configured to constrain the v-belt 116 causing the disengaged v-belt 116 to separate from the drive pulley 122 and the driven pulley 130 as is shown in FIG. 4. The plurality of belt guards 180, 182, 184, 186, and 188 restrict the outward movement of the v-belt 116 after the v-belt 116 is disengaged from the drive pulley 122 and the driven pulley 130. As the v-belt 116 is disengaged and clamped by the friction brake 160, the v-belt 116 is directed against the inner surfaces 190, 192, 194, 196, and 198 of the plurality of belt guards 180, 182, 184, 186, and 188 to keep the v-belt 116 completely separated from the drive pulley 122 and the driven pulley 130 to eliminate any friction between the v-belt 116 and the drive pulley 122 or the driven pulley 130.

As shown in FIG. 4, when the actuator 140 is in a retracted position and the v-belt 116 is securely clamped by the friction brake 160, a safety pin 200 may be inserted into an aperture (not shown) in the clamping element 166 and extended at least partially into a bore (not shown) in the drive apparatus to ensure that the clamping element 166 cannot move, thereby insuring that the v-belt 116 remains securely clamped by the friction brake 160 and completely separated from the drive pulley 122 and the driven pulley 130. Although the safety pin 200 is shown inserted in the clamping element 166, it should be noted that in other embodiments the safety pin 200 may be inserted in other positions as long as the safety pin 200 prevents the idler drum 142 from being moved to frictionally engage the v-belt 116.

Although the v-belt clutch systems 10 and 110 have been described herein as being a single belt type system, sometimes referred to as a flat belt drive system, which transmits power from a drive pulley to a driven pulley where the axes of the pulleys are parallel to one another. It should be understood that the presently disclosed inventive concepts are not limited to single belt type systems and can be implemented, for instance, in a compound belt system (not shown) where the axes of a drive pulley, a driven pulley, and any number of intermediate pulleys are not parallel to each other.

In one embodiment (not shown), a v-belt clutch system similar to v-belt clutch systems 10 and 110 may be provided with at least two actuators and a controller configured to dynamically control pushing and pulling linear forces on the at least two actuators. In such an embodiment, a first actuator of the at least two actuators may be operable to exert a pushing or pulling linear force on an idler pulley, and a second actuator of the at least two actuators may be operable to exert a pushing or pulling linear force on a friction brake to move a friction element. In this embodiment, the controller may be configured to move the first actuator and the second actuator independently of one another thereby allowing independent adjustment of tension on a v-belt with the idler pulley or a clamping force applied to the v-belt by the friction brake.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope and coverage of the inventive concepts disclosed and claimed herein.

Embodiments of the invention:
1. A v-belt clutch, comprising:
   a drive pulley;
   a driven pulley spaced apart from the drive pulley;
   a v-belt selectively rotationally coupling the drive pulley and the driven pulley;
   at least one rotating idler pulley positioned between the drive pulley and the driven pulley, the idler pulley positionable between an engaged position increasing tension on the v-belt and coupling the rotation of the drive pulley to the driven pulley causing the driven pulley to rotate when the drive pulley rotates and a disengaged position reducing tension on the v-belt and decoupling the rotation of the drive pulley to the driven pulley allowing the drive pulley to rotate without causing the driven pulley to rotate; and
   a friction brake having a friction element supported in a predetermined relation to one side of the v-belt and a clamping face positioned on an opposite side of the v-belt, the clamping face moveable between a first position wherein the clamping face is spaced a first distance from the friction element when the idler pulley is in the engaged position such that the v-belt may freely rotate and frictionally engage the drive pulley and the driven pulley and a second position wherein the clamping face is spaced a second distance from the friction element when the idler pulley is in the disengaged position such that the v-belt is securely clamped by the friction element and the clamping face.
2. The v-belt clutch of embodiment 1, further comprising an actuator operable between a retracted position and an extended position, the actuator extending to exert a pushing force which moves the idler pulley into the engaged position in which the idler pulley frictionally engages an inside surface of the v-belt and the actuator retracting to exert a pulling force which moves the idler pulley into the disengaged position in which the idler pulley at least partially disengages from the inside surface of the v-belt.
3. The v-belt clutch of embodiment 2, further comprising means for locking the actuator in the retracted position such that the idler pulley is prevented from moving to the engaged position.
4. The v-belt clutch of embodiment 1, further comprising an actuator operable between a retracted position and an extended position, the actuator extending to exert a pushing force which moves the idler pulley into the engaged position in which the idler pulley frictionally engages an outside surface of the v-belt and the actuator retracting to exert a pulling force which moves the idler pulley into the disengaged position in which the idler pulley at least partially disengages from the outside surface of the v-belt.
5. The v-belt clutch of embodiment 4, further comprising means for locking the actuator in the retracted position such that the idler pulley is prevented from moving to the engaged position.
6. The v-belt clutch of embodiment 1, further comprising a plurality of belt guards provided with inner surfaces configured to constrain the v-belt in the disengaged position ensuring that the v-belt in the disengaged position remains operably separated from the drive pulley and the driven pulley.
7. The v-belt clutch of embodiment 1, wherein the clamping face is pivotally connected to the idler pulley in a way that movement of the idler pulley into the engaged position moves the clamping face into the first position and movement of the idler pulley into the disengaged position moves the clamping face into the second position.
8. The v-belt clutch of embodiment 1, wherein the idler pulley is positionable in a way that selectively adjusts the tension on the v-belt.
9. The v-belt clutch of embodiment 1, wherein the clamping face is positionable in a way that selectively adjusts the friction exerted on the v-belt by the friction brake.
10. The v-belt clutch of embodiment 1, wherein the idler pulley is positionable in a way that selectively adjusts the tension on the v-belt, wherein the clamping face is positionable in a way that selectively adjusts the friction exerted on the v-belt by the friction brake, and wherein the idler pulley and the clamping face are positionable independently of one another.
11. A clutch, comprising:
   a drive pulley;
   a driven pulley spaced apart from the drive pulley;
   a belt selectively rotationally coupling the drive pulley and the driven pulley;
   at least one rotating idler pulley positioned between the drive pulley and the driven pulley, the idler pulley positionable between an engaged position increasing tension on the belt and coupling the rotation of the drive pulley to the driven pulley causing the driven pulley to rotate when the drive pulley rotates and a disengaged position reducing tension on the belt and decoupling the rotation of the drive pulley to the driven pulley allowing the drive pulley to rotate without causing the driven pulley to rotate; and
   a friction brake having a friction element supported in a predetermined relation to one side of the belt and a clamping face positioned on an opposite side of the belt, the clamping face moveable between a first position wherein the clamping face is spaced a first distance from the friction element when the idler pulley is in the engaged position such that the belt may freely rotate and frictionally engage the drive pulley and the driven pulley and a second position wherein the clamping face is spaced a second distance from the friction element when the idler pulley is in the disengaged position such that the belt is securely clamped by the friction element and the clamping face.
12. The clutch of embodiment 11, further comprising an actuator operable between a retracted position and an extended position, the actuator extending to exert a pushing force which moves the idler pulley into the engaged position in which the idler pulley frictionally engages an inside surface of the belt and the actuator retracting to exert a pulling force which moves the idler pulley into the disengaged position in which the idler pulley at least partially disengages from the inside surface of the belt.
13. The clutch of embodiment 12, further comprising means for locking the actuator in the retracted position such that the idler pulley is prevented from moving into the engaged position.
14. The clutch of embodiment 11, further comprising an actuator operable between a retracted position and an extended position, the actuator extending to exert a pushing force which moves the idler pulley into the engaged position in which the idler pulley frictionally engages an outside surface of the belt and the actuator retracting to exert a pulling force which moves the idler pulley into the disengaged position in which the idler pulley at least partially disengages from the outside surface of the belt.
15. The clutch of embodiment 14, further comprising means for locking the actuator in the retracted position such that the idler pulley is prevented from moving into the engaged position.
16. The clutch of embodiment 11, further comprising a plurality of belt guards provided with inner surfaces configured to constrain the belt in the disengaged position ensuring that the belt in the disengaged position remains operably separated from the drive pulley and the driven pulley.
17. The clutch of embodiment 11, wherein the clamping face is pivotally connected to the idler pulley in a way that movement of the idler pulley into the engaged position moves the clamping face into the first position and movement of the idler pulley into the disengaged position moves the clamping face into the second position.
18. The clutch of embodiment 11, wherein the idler pulley is positionable in a way that selectively adjusts the tension on the v-belt.
19. The clutch of embodiment 11, wherein the clamping face is positionable in a way that selectively adjusts the friction exerted on the v-belt by the friction brake.
20. The clutch of embodiment 11, wherein the idler pulley is positionable in a way that selectively adjusts the tension on the v-belt, wherein the clamping face is positionable in a way that selectively adjusts the friction exerted on the v-belt by the friction brake, and wherein the idler pulley and the clamping face are positionable independently of one another.

## Claims

1. A clutch, comprising:
a drive pulley;
a driven pulley spaced apart from the drive pulley;
a belt selectively rotationally coupling the drive pulley and the driven pulley;
at least one rotating idler pulley positioned between the drive pulley and the driven pulley, the idler pulley positionable between an engaged position increasing tension on the belt and coupling the rotation of the drive pulley to the driven pulley causing the driven pulley to rotate when the drive pulley rotates and a disengaged position reducing tension on the belt and decoupling the rotation of the drive pulley to the driven pulley allowing the drive pulley to rotate without causing the driven pulley to rotate; and
a friction brake having a friction element supported in a predetermined relation to one side of the belt and a clamping face positioned on an opposite side of the belt, the clamping face moveable between a first position wherein the clamping face is spaced a first distance from the friction element when the idler pulley is in the engaged position such that the belt may freely rotate and frictionally engage the drive pulley and the driven pulley and a second position wherein the clamping face is spaced a second distance from the friction element when the idler pulley is in the disengaged position such that the belt is securely clamped by the friction element and the clamping face.

2. The clutch of claim 1, further comprising an actuator operable between a retracted position and an extended position, the actuator extending to exert a pushing force which moves the idler pulley into the engaged position in which the idler pulley frictionally engages an inside surface of the belt and the actuator retracting to exert a pulling force which moves the idler pulley into the disengaged position in which the idler pulley at least partially disengages from the inside surface of the belt.

3. The clutch of claim 2, further comprising means for locking the actuator in the retracted position such that the idler pulley is prevented from moving into the engaged position.

4. The clutch of claim 1, further comprising an actuator operable between a retracted position and an extended position, the actuator extending to exert a pushing force which moves the idler pulley into the engaged position in which the idler pulley frictionally engages an outside surface of the belt and the actuator retracting to exert a pulling force which moves the idler pulley into the disengaged position in which the idler pulley at least partially disengages from the outside surface of the belt.

5. The clutch of claim 4, further comprising means for locking the actuator in the retracted position such that the idler pulley is prevented from moving into the engaged position.

6. The clutch of any one of claims 1-5, further comprising a plurality of belt guards provided with inner surfaces configured to constrain the belt in the disengaged position ensuring that the belt in the disengaged position remains operably separated from the drive pulley and the driven pulley.

7. The clutch of any one of claims 1-6, wherein the clamping face is pivotally connected to the idler pulley in a way that movement of the idler pulley into the engaged position moves the clamping face into the first position and movement of the idler pulley into the disengaged position moves the clamping face into the second position.

8. The clutch of any one of claims 1-7, wherein the idler pulley is positionable in a way that selectively adjusts the tension on the belt.

9. The clutch of any one of claims 1-8, wherein the clamping face is positionable in a way that selectively adjusts the friction exerted on the belt by the friction brake.

10. The clutch of any one of claims 1-7, wherein the idler pulley is positionable in a way that selectively adjusts the tension on the belt, wherein the clamping face is positionable in a way that selectively adjusts the friction exerted on the belt by the friction brake, and wherein the idler pulley and the clamping face are positionable independently of one another.

11. The clutch of any one of claims 1-10, wherein the belt is a v-belt.
